# EUROPÄISCHE PATENTANMELDUNG

(11) **EP 1 043 366 A2**
(43) Veröffentlichungstag der Anmeldung: **11.10.2000**
(21) Anmeldenummer: 00106998.8
(22) Anmeldetag: 01.04.2000
(51) Int. Cl.: C09B 67/22

(54) **Mischungen von faserreaktiven Farbstoffen, Verfahren zu deren Herstellung und deren Verwendung zum Färben von Fasermaterial**

(30) Priorität: 08.04.1999 DE 19915802
(71) Anmelder: DyStar Textilfarben GmbH & Co. Deutschland KG, 60318 Frankfurt am Main (DE)
(72) Erfinder: Ehrenberg, Stefan, Dr., 60528 Frankfurt am Main (DE); Schumacher, Christian, Dr., 65779 Kelkheim (DE)

(57) **Zusammenfassung**

Die vorliegende Erfindung betrifft Farbstoffmischungen, die einen oder mehrere, Farbstoffe der allgemeinen Formel (I) 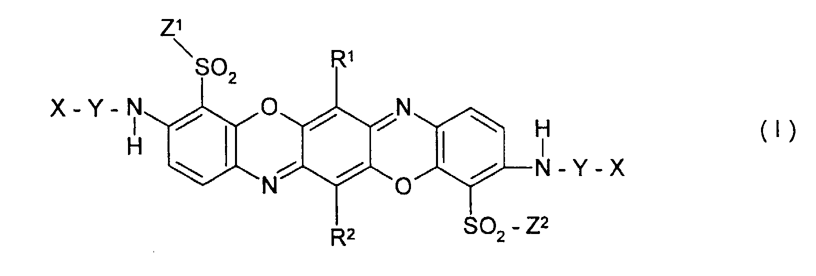 und einen oder mehrere Farbstoffe der allgemeinen Formel (II) 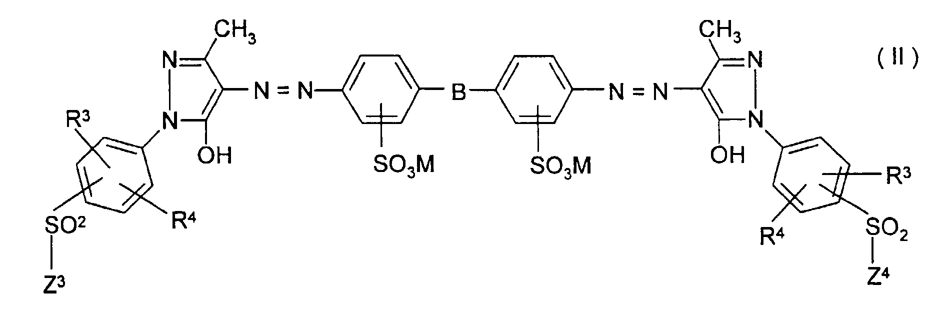 enthalten, worin B, M, R¹ , R², R³, R⁴, X, Y, Z¹ Z², Z³ und Z⁴ die in Anspruch 1 beschriebene Bedeutung haben, Verfahren zu ihrer Herstellung, sowie ihre Verwendung zum Färben oder Bedrucken von hydroxy- und/oder carbonamidgruppenhaltigem Material.

## Beschreibung

Die vorliegende Erfindung liegt auf dem technischen Gebiet der faserreaktiven Farbstoffe.
Um grüne Reaktivfärbungen zu erhalten, ist entweder der Einsatz von grünen reaktiven Phthalocyaninfarbstoffen oder von Mischungen von blauen mit gelben Reaktivfarbstoffen erforderlich. Mischungen von gelben Reaktivfarbstoffen mit marineblauen Azofarbstoffen sind relativ trüb und haben schlechte Lichtechtheiten. Mischungen von gelben Reaktivfarbstoffen mit reaktiven Phthalocyaninen sind zwar brillant, haben aber schlechte Waschechtheiten. Außerdem sind Mischungen mit gelben Reaktivfarbstoffen häufig phototrop.

Leider sind gerade die farbstarken, brillanten reaktiven Triphendioxazinfarbstoffe aufgrund starker Blockiereffekte nur schlecht kombinierbar. Dieses Problem wird in der US-PS 5 484 459 beschrieben.

Aufgabe der vorliegenden Erfindung war es deshalb, Mischungen von gelben Reaktivfarbstoffen mit Triphendioxazinen im grünen Nuancenbereich zur Verfügung zu stellen, die die oben genannten Nachteile nicht aufweisen.

Es wurde nun überraschenderweise gefunden, daß Mischungen, die Farbstoffe der allgemeinen Formel (1) und (2) enthalten, zu hervorragenden Ergebnissen führen.

Die vorliegende Erfindung betrifft somit Farbstoffmischungen, die einen oder mehrere Farbstoffe der allgemeinen Formel (1) 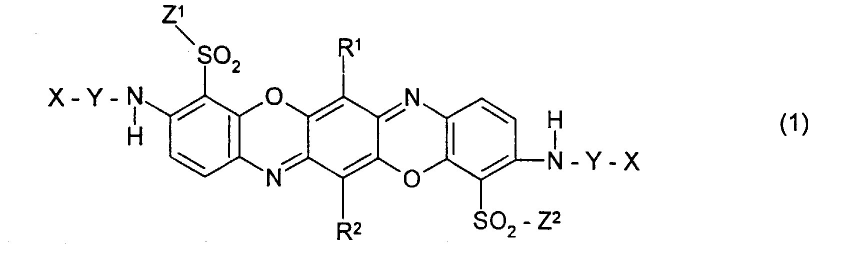 und einen oder mehrere Farbstoffe der allgemeinen Formel (2) 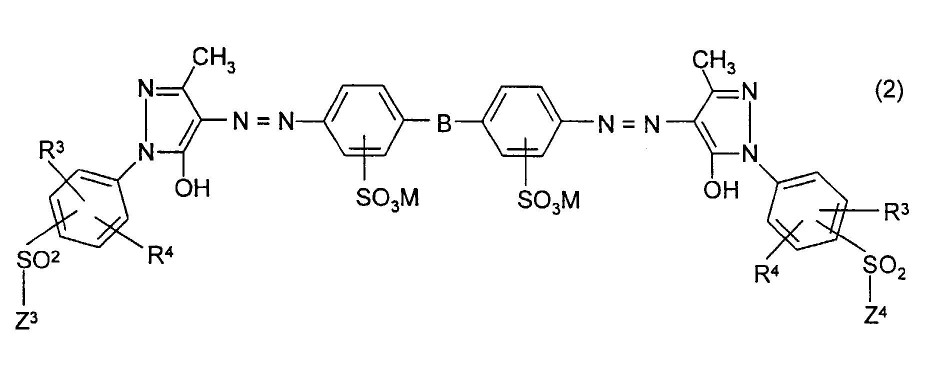 enthalten, worin bedeuten:
- R¹: ist Wasserstoff oder Chlor, bevorzugt Chlor;
- R²: ist Wasserstoff oder Chlor, bevorzugt Chlor;
- Z¹: ist OM, Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Z²: ist OM, Hydroxyethyl, Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Z³: ist Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Z⁴: ist Hydroxyethyl, Vinyl oder ist Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl, β-Chlorethyl und β-Sulfatoethyl und insbesondere bevorzugt Vinyl und β-Sulfatoethyl;
- Y: ist ein geradkettiger oder verzweigter Alkylenrest von 2 bis 6 C-Atomen, der durch 1 oder 2 Heterogruppen aus der Gruppe -NH-, -O-, -SO₂-unterbrochen sein kann;
- X: ist W oder -NR*CO-V-COOM und steht, falls bei Z¹ und Z² = OM, für einen Rest der Formel (1a) 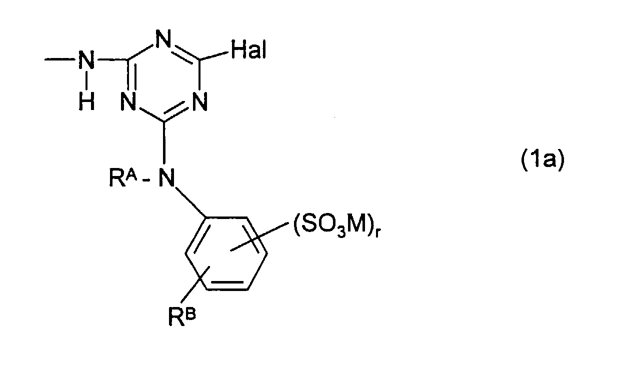 worin
- Hal: ist Chlor oder Fluor;
- r: steht für die Zahl 1 oder 2;
- R^{A}: ist Wasserstoff, Alkyl von 1 bis 4 C-Atomen, wie Ethyl und insbesondere Methyl, Hydroxyethyl oder Sulfoethyl;
- R^{B}: ist Wasserstoff, Methoxy, Ethoxy, Methyl oder Ethyl;
- W: ist Sulfato, Sulfo oder Carboxy;
- R*: ist Wasserstoff oder eine Alkylgruppe von 1 bis 4 C-Atomen;
- V: ist -(CH2)n mit n = 1 bis 4;
- R³: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Sulfo oder Carboxy, bevorzugt Wasserstoff, Methyl und Methoxy und insbesondere bevorzugt Wasserstoff;
- R⁴: ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Sulfo oder Carboxy, bevorzugt Wasserstoff, Methyl und Methoxy und insbesondere bevorzugt Wasserstoff;
- B: ist eine direkte Bindung oder Alkylen von 1-3 C-Atomen;
- M: ist Wasserstoff, ein Alkalimetall, wie Natrium, Kalium oder Lithium, oder das Äquivalent eines Erdalkalimetalls, wie des Calciums, bevorzugt Wasserstoff und insbesondere Natrium, Kalium oder Lithium.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.
Gruppen der allgemeinen Formeln (3a) und (3b) 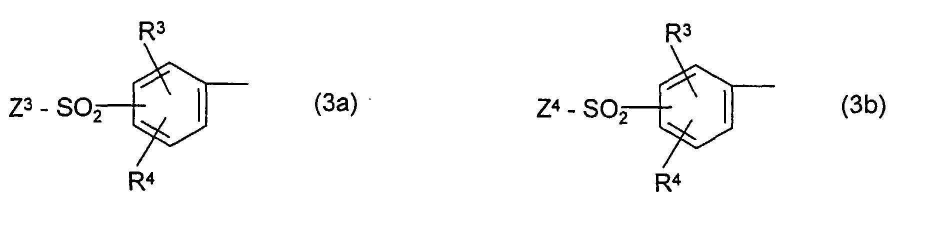 die in den Farbstoffen (2) enthalten sind, sind
beispielsweise 3-(β-Sulfatoethylsulfonyl)-phenyl, 4-(β-Sulfatoethylsulfonyl)-phenyl, 2-Methyl-5-(β-sulfatoethylsulfonyl)-phenyl, 2-Methoxy-5-(β-sulfatoethylsulfonyl)-phenyl, 4-Methyl-3-(β-sulfatoethylsulfonyl)-phenyl, 2, 5-Dimethyl-4-(β-sulfatoethylsulfonyl)-phenyl, 2,6-Dimethyl-4-(β-sulfatoethylsulfonyl)-phenyl, 2-Methoxy-4-(β-sulfatoethylsulfonyl)-phenyl, 4-Methoxy-5-(β-sulfatoethylsulfonyl)-phenyl, 2-Methoxy-5-methyl-4-(β-sulfatoethylsulfonyl)-phenyl, 2,4-Dimethoxy-5-(β-sulfatoethylsulfonyl)-phenyl, 2, 5-Dimethoxy-4-(β-sulfatoethylsulfonyl)-phenyl, 2-Carboxy-5-(β-sulfatoethylsulfonyl)-phenyl, 2-Sulfo-5-(β-sulfatoethylsulfonyl)-phenyl und 2-Sulfo-4-(β-sulfatoethylsulfonyl)-phenyl, hiervon insbesondere 3- oder 4-(β-Sulfatoethylsulfonyl)-phenyl, sowie deren Derivate, in welchen die β-Sulfatoethylsulfonyl-Gruppe durch die Vinylsulfonyl- oder β-Thiosulfato-ethylsulfonyl- oder β-Chlorethylsulfonyl-Gruppe ausgetauscht ist.
Die Gruppen Z³-SO₂- und Z⁴-SO₂ stehen bevorzugt in meta- oder para-Stellung zum Pyrazolrest.

Von den erfindungsgemäßen Farbstoffmischungen sind solche mit Farbstoffen (1) bevorzugt, in welchen R¹ und R² Chlor, Y Ethyl, W Sulfato, NHCOCH₂CH₂COOH, und Z¹ und Z² β-Sulfatoethyl bedeuten.

Von den erfindungsgemäßen Farbstoffmischungen sind ebenfalls solche mit Farbstoffen (2) bevorzugt, in welchen B eine direkte Bindung, SO₂-Z³ bzw. SO₂-Z⁴ für 4-(β-Sulfatoethylsulfonyl) und die Sulfo-Gruppe ortho oder meta ständig zur Diazogruppe steht.

Die Farbstoffe der allgemeinen Formel (1) können, insbesondere bei gleichem Chromophor, unterschiedliche faserreaktive Gruppen -SO₂-Z¹ und -SO₂-Z² besitzen (gleiches gilt auch für die Farbstoffe der allgemeinen Formel (2) für -SO₂-Z³ und -SO₂-Z⁴). Insbesondere können die Farbstoffmischungen Farbstoffe gleichen Chromophors entsprechend den hier angesprochenen allgemeinen Formeln enthalten, in denen die faserreaktiven Gruppen -SO₂-Z¹, -SO₂-Z², -SO₂-Z³ bzw. -SO₂-Z⁴ zum einen Vinylsulfonylgruppen und zum anderen β-Chlorethylsulfonyl- oder β-Thiosulfatoethylsulfonyl- oder bevorzugt β-Sulfatoethylsulfonyl-Gruppen sind.

In den erfindungsgemäßen Farbstoffmischungen betragen die Verhältnisse des oder der Farbstoffe (1) und des oder der Farbstoffe (2) bevorzugt von 98 : 2 bis 10 : 90 Gew.-%, besonders bevorzugt im Verhältnis von 70 : 30 Gew.-% bis 30 : 70 Gew.-% und ganz besonders bevorzugt in einem Verhältnis 60 : 40 bis 40: 60 Gew.-%.
Die erfindungsgemäßen Farbstoffmischungen können durch Mischen der einzelnen Farbstoffe hergestellt werden.

Im nachfolgenden können die Farbstoffe der allgemeinen Formeln (1) pauschal als 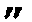 Farbstoffe (1)" und die Farbstoffe (2) pauschal als 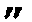 Farbstoffe (2)" bezeichnet werden. Sie sind aus DE-A 1215282, EP-A 0153599 und aus EP-B 258495 bekannt und können analog den dort beschriebenen Verfahrensweisen hergestellt werden.

Zur Bestimmung der Blockiereffekte wird das zu färbende Material mit einer erfindungsgemäßen Mischung gefärbt. In weiteren identischen Färbeverfahren wird mit einem oder mehreren erfindungsgemäßen Farbstoffen der allgemeinen Formel (1) zunächst gefärbt unddieses gefärbte Material anschließend in einem erneuten identischen Färbeverfahren mit einem oder mehreren erfindungsgemäßen Farbstoff der allgemeinen Formel (2) nachgefärbt. Anschließend wird in einem identischen Färbeverfahren erneut eine Färbung hergestellt, bei der zunächst ein oder mehrere erfindungsgemäße Farbstoffe der allgemeinen Formel (2) eingesetzt wird, die jedoch mit den zuvor eingesetzten erfindungsgemäßen Farbstoffen identisch sein müssen, und danach wird wiederum in einem identischen Färbeverfahren ein oder mehrere Farbstoffe der allgemeinen Formel (1) auf das zu färbende Material appliziert.
Wenn alle drei vorgehend beschriebenen Färbungen die gleiche Nuance haben, zeigen die untersuchten Farbstoffe keinen Blockiereffekt

Die erfindungsgemäßen Farbstoffmischungen zeichnen sich durch gute Kombinierbarkeit aus. Sie zeigen keine Blockiereffekte, was vorteilhaft für die Egalität und die Wirtschaftlichkeit der Färbungen ist. Weiterhin sind die erfindungsgemäßen Färbungen nicht phototrop.

Die erfindungsgemäßen Farbstoffmischungen können als Präparationen in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wässriger Lösung zwischen 3 und 7 einzustellen vermögen, wie Natriumcarbonat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen and Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung bis zu 10 bis 80 Gew.-% bezogen auf die enthaltene Präparation, enthalten. Die Puffersubstanzen liegen in der Regel in einer Gesamtmenge von bis zu 5 Gew.-% bezogen auf die Präparation, vor. Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 50 Gew.-%, wobei der Elektrolytsalzgehalt in diesen wäßrigen Lösungen bevorzugt unterhalb 10 Gew.-% bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die Abscheidung der auf chemischem Wege hergestellten erfindungsgemäßen Farbstoffmischungen aus deren Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen oder Sprühtrocknung der Reaktionslösung, wobei dieser Reaktionslösung eine Puffersubstanz zugefügt werden kann.

Die erfindungsgemäßen Farbstoffmischungen können weitere faserreaktive Farbstoffe, die zum Nuancieren der Farbstoffmischung dienen, in einer Menge von bis zu 5 Gew.-% enthalten. Diese Nuancierfarbstoffe können durch übliches Vermischen hinzugefügt werden.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese der Azoverbindungen anfallenden Lösungen nach deren Vermischen zu den erfindungsgemäßen Farbstoffmischungen, gegebenenfalls nach oder unter Zusatz einer Puffersubstanz, gegebenenfalls auch nach Konzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren unter Verwendung von verschiedensten säurebindenden Mitteln und gegebenenfalls neutralen Salzen, wie Natriumchlorid oder Natriumsulfat, Färbungen mit sehr guten, gegenüber den Einzelfarbatoffen verbesserten Farbausbeuten. Man färbt bevorzugt in wäßrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetailsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Farbstoffmischungen zeichnen sich auf den Cellulosefasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbatoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und sehr gute Naßechtheiten, wie Wasch-, Walk-, Wasser-, Seewasser-, Überfärbe- und saure sowie alkalische Schweißechtheiten, des weiteren eine gute Plissierechtheit, Bügelechtheit und Reibechtheit auf.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, klare, gelbstichig grüne bis grünstichig blaue Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der freien Säuren angegeben; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

### Beispiel 1

1000 Teile einer wäßrigen Lösung mit 120 Teilen des nachstehend angegebenen Farbstoffes der Formel (A), wie eine Syntheselösung dieses Farbstoffes, und 1000 Teile einer wäßrigen Lösung mit 65 Teilen des nachstehend angegebenen Farbstoffes der Formel (B), wie eine Syntheselösung dieses Farbstoffes 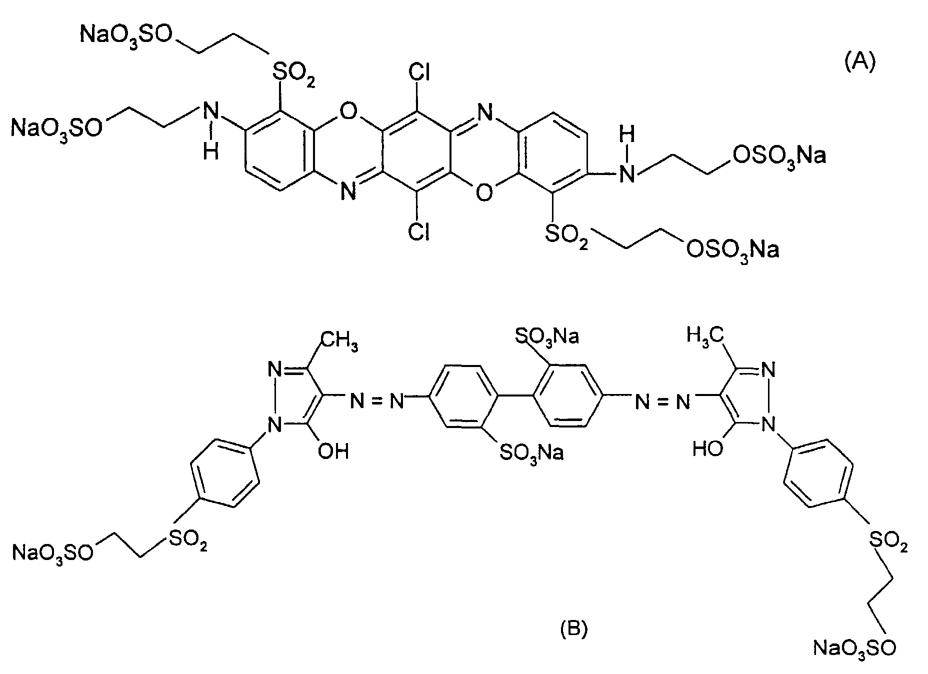 werden miteinander vermischt.

Man isoliert die erfindungsgemäße Farbstoffmischung aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielswiese auf cellulosischen Fasermaterialien, wie Baumwolle, oder Celluloseregeneratfasern in einem für faserreaktive Farbstoffe üblichen Ausziehfärbeverfahren farbstarke brillant grüne Färbungen ohne jeglichen Blockiereffekt.

### Beispiel 2

400 Teile eines elektrolythaltigen Farbstoffpulvers, das den blauen Reaktivfarbstoff der Formel (C) zu 50 % enthält, werden mit 200 Teilen eines elektrolythaltigen Farbstoffpulvers, das den gelben Disazofarbstoff der Formel (B) zu 45 % enthält, 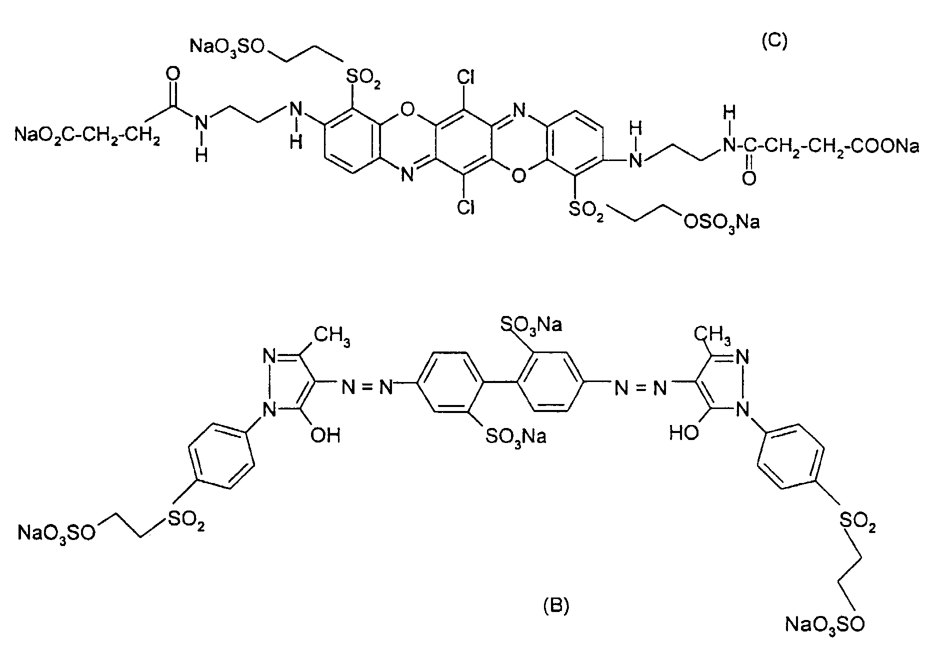 in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern Färbungen und Drucke in tiefen grünstichig blauen Tönen.

### Beispiel 3

500 Teile eines elektrolythaltigen Farbstoffpulvers, das den blauen Reaktivfarbstoff der Formel (A) zu 50 % enthält, werden mit 500 Teilen eines elektrolythaltigen Farbstoffpulvers, das den gelben Disazofarbstoff der Formel (D) zu 48 % enthält, 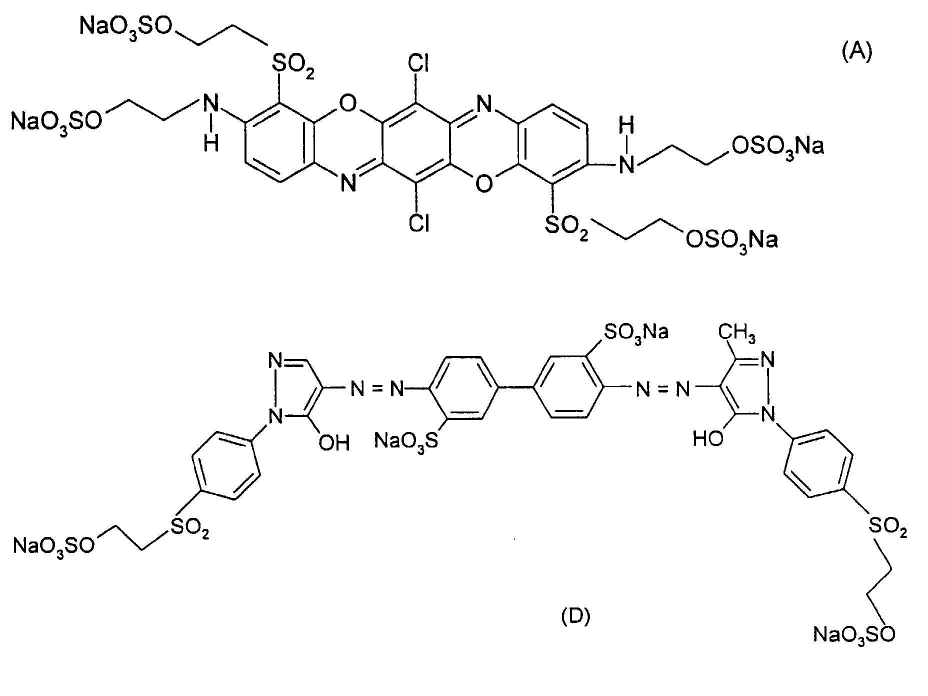 in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern Färbungen und Drucke in tiefen grünen Tönen.

### Beispiel 4

250 Teile eines elektrolythaltigen Farbstoffpulvers, das den gelben Disazofarbstoff der in Beispiel 1 angegebenen Formel (B) zu 45 % enthält, werden mit 100 Teilen eines elektrolythaltigen Farbstoffpulvers, das den blauen Reaktivfarbstoff der Formel (E) 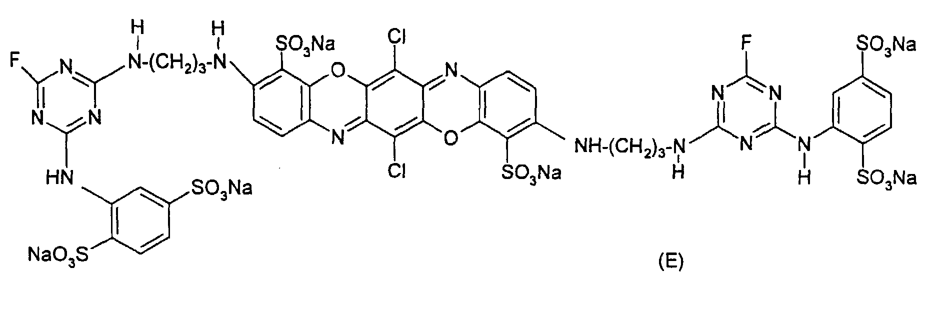 zu 40 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern farbstarke Färbungen in gelbstichig grünen Tönen.

### Beispiele 5 bis 10

In den nachfolgenden Tabellenbeispielen sind weitere erfindungsgemäße Farbstoffmischungen aus dem Farbstoff der Formel (A) und aus dem Farbstoff der Formel (B) beschrieben.
Diese Farbstoffmischungen ergeben auf den in der Beschreibung genannten Fasermaterialien, nach den in der Technik für faserreaktive Farbstoffe üblichen Applikations- und Fixierverfahren farbstarke, echte Färbungen mit dem in dem jeweiligen Tabellenbeispiel angegebenen Farbton (hier auf Baumwolle).

| Bsp. | Mischungsverhältnis (A) : (B) in Gew.-% | Farbton |
|---|---|---|
| 5 | 60 : 40 | grün |
| 6 | 30 : 70 | gelbstichig-grün |
| 7 | 50 : 50 | grün |
| 8 | 70 : 30 | grünstichig-blau |
| 9 | 80 : 20 | grünstichig-blau |
| 10 | 90 : 10 | grünstichig-blau |

## Patentansprüche

1. Farbstoffmischungen, die einen oder mehrere Farbstoffe der allgemeinen Formel (1) 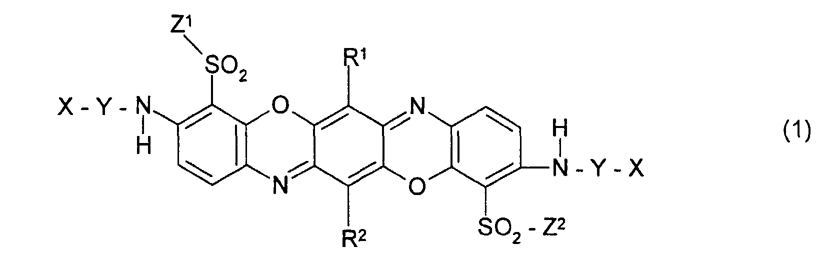 und einen oder mehrere Farbstoffe der allgemeinen Formel (2) 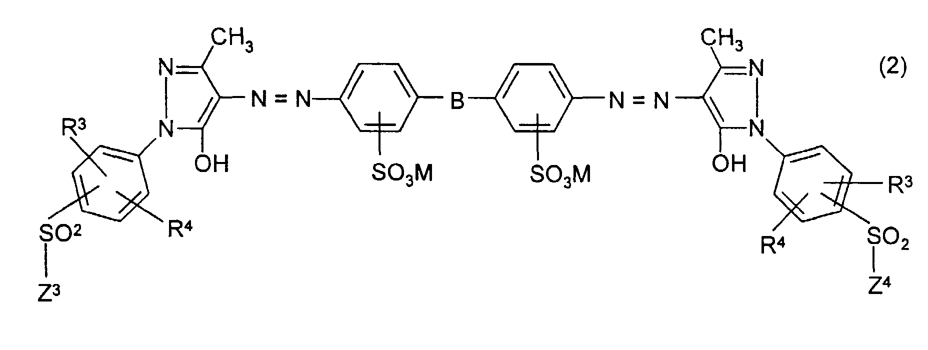 enthalten, worin bedeuten:
R¹ ist Wasserstoff oder Chlor;
R² ist Wasserstoff oder Chlor;
Z¹ ist OM, Vinyl oder ist Ethyl, das in β-Stellung durch einen alkalisch eliminierbaren Substituenten substituiert ist;
Z² ist OM, Hydroxyethyl, Vinyl oder ist Ethyl, das in β-Stellung durch einen alkalisch eliminierbaren Substituenten substituiert ist;
Z³ ist Vinyl oder ist Ethyl, das in β-Stellung durch einen alkalisch eliminierbaren Substituenten substituiert ist;
Z⁴ ist Hydroxyethyl, Vinyl oder ist Ethyl, das in β-Stellung durch einen alkalisch eliminierbaren Substituenten substituiert ist;
Y ist ein geradkettiger oder verzweigter Alkylenrest von 2 bis 6 C-Atomen, der durch 1 oder 2 Heterogruppen aus der Gruppe -NH-, -O-, -SO₂- unterbrochen sein kann;
X ist W oder -NR*CO-V-COOM; bei Z¹ und Z² = OM hat X die Bedeutung von Formel (1a) 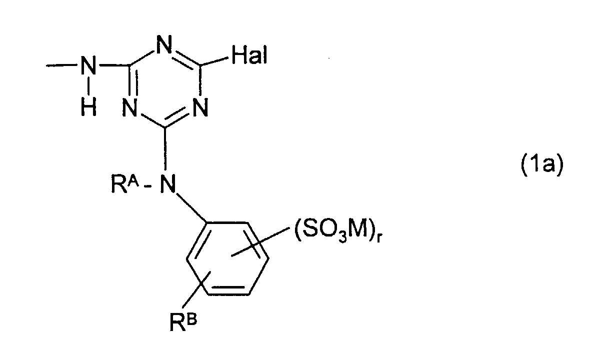 worin
Hal ist Chlor oder Fluor;
r steht für die Zahl 1 oder 2;
R^{A} ist Wasserstoff, Alkyl von 1 bis 4 C-Atomen, wie Ethyl und insbesondere Methyl, Hydroxyethyl oder Sulfoethyl;
R^{B} ist Wasserstoff, Methoxy, Ethoxy, Methyl oder Ethyl;
W ist Sulfato, Sulfo oder Carboxy;
R* ist Wasserstoff oder eine Alkylgruppe von 1 bis 4 C-Atomen;
V ist eine direkte Bindung oder eine geradkettige oder verzweigte Alkylengruppe von 1 bis 8 C-Atomen;
R³ ist Wasserstoff, Alkyl von 1 bis 4 C-Atomen, Alkoxy von 1 bis 4 C-Atomen, Sulfo, Carboxy;
R⁴ ist Wasserstoff, Alkyl von 1 bis 4 C-Atomen, Alkoxy von 1 bis 4 C-Atomen, Sulfo, Carboxy;
B ist eine direkte Bindung oder Alkyl von 1 bis 3 C-Atomen;
M ist Wasserstoff, ein Alkalimetall, oder das Äquivalent eines Erdalkalimetalls.

2. Farbstoffmischungen nach Anspruch 1, dadurch gekennzeichnet, daß R¹ und R² beide Chlor sind.

3. Farbstoffmischungen nach Anspruch 1 und/oder 2, dadurch gekennzeichnet, daß R³ und R⁴ beide Wasserstoff sind.

4. Farbstoffmischungen nach einem oder mehreren der Ansprüche 1 bis 3, dadurch gekennzeichnet, daß Z¹, Z², Z³ und Z⁴ β-Sulfatoethyl oder Vinyl sind.

5. Farbstoffmischungen nach einem oder mehreren der Ansprüche 1 bis 4, dadurch gekennzeichnet, daß Y -CH₂CH₂- ist.

6. Farbstoffmischungen nach einem oder mehreren der Ansprüche 1 bis 5, dadurch gekennzeichnet, daß X -OSO₃H ist.

7. Farbstoffmischungen nach einem oder mehreren der Ansprüche 1 bis 5, dadurch gekennzeichnet, daß X - NHCOCH₂CH₂COOH ist.

8. Farbstoffmischungen nach einem oder mehreren der Ansprüche 1 bis 8, dadurch gekennzeichnet, daß der oder die Farbstoffe der allgemeinen Formel (1) und der oder die Farbstoffe der allgemeinen Formel (2) in einem Mischungsverhältnis 98 : 2 bis 10 : 90 Gew.-% vorliegen.

9. Verfahren zur Herstellung der erfindungsgemäßen Farbstoffmischung, dadurch gekennzeichnet, daß man die Farbstoffe der allgemeinen Formeln (1) und (2) mischt.

10. Verwendung einer Farbstoffmischung gemäß einem oder mehreren der Ansprüche 1 bis 8 zum Färben von hydroxy- und/oder carbonamidgruppenhaltigem Material.
